# EUROPÄISCHE PATENTANMELDUNG

(11) **EP 4 475 367 A1**
(43) Veröffentlichungstag der Anmeldung: **11.12.2024**
(21) Anmeldenummer: 23178035.4
(22) Anmeldetag: 07.06.2023
(51) Int. Cl.: H02H 1/00

(54) **SCHUTZGERÄT UND VERFAHREN ZU DESSEN BETRIEB**

(71) Anmelder: Siemens Aktiengesellschaft, 80333 München (DE)
(72) Erfinder: Kerger, Torsten, 14621 Schönwalde-Glien (DE); Matussek, Robert, 10365 Berlin (DE)
(74) Vertreter: Siemens Patent Attorneys

(57) **Zusammenfassung**

Die Erfindung bezieht sich unter anderem auf ein Schutzgerät (20, 40) zum Schutz einer elektrischen Energieversorgungsanlage (50), wobei das Schutzgerät (20, 40) mit mindestens einer Datenübertragungsschnittstelle (22) ausgestattet ist, die zum Kommunizieren mit zumindest einem anderen Schutzgerät (20, 40) geeignet ist. Erfindungsgemäß ist vorgesehen, dass das Schutzgerät (20, 40) eine Auswerteinrichtung (23) aufweist, die dazu ausgestaltet ist, über die Datenübertragungsschnittstelle (22) empfangene Daten (D) des zumindest einen anderen Schutzgeräts (20, 40) auszuwerten und darin enthaltene Störschriebe (SS) und/oder Zustandswechselmeldungen (ZWM) sowie in den Daten (D) enthaltene Uhrzeitstempel (US), die dem jeweiligen Störschrieb (SS) oder der jeweiligen Zustandswechselmeldung (ZWM) zugeordnet sind, auszulesen, und das Schutzgerät (20, 40) eine Dokumentationseinrichtung (24) aufweist, die im Falle eines empfangenen Störschriebs (SS) oder einer empfangenen Zustandswechselmeldung (ZWM) den jeweils dazu ebenfalls empfangenen Uhrzeitstempel (US) in einen korrespondierenden eigenen Uhrzeitstempel (US) umrechnet und den eigenen Uhrzeitstempel (US) dem empfangenen Störschrieb (SS) oder der empfangenen Zustandswechselmeldung (ZWM) zuordnet, wobei der empfangene Uhrzeitstempel (US) die Uhrzeit der Aufnahme des jeweiligen Störschriebs (SS) oder die Uhrzeit des Erkennens eines von der jeweiligen Zustandswechselmeldung (ZWM) angezeigten Zustandswechsels gemäß der jeweiligen Uhrzeit des zumindest eines anderen Schutzgeräts (20, 40) angibt und wobei der eigene Uhrzeitstempel (US) angibt, zu welcher Uhrzeit der jeweilige Störschrieb (SS) oder der jeweilige Zustandswechsel gemäß der eigenen Uhrzeit von dem zumindest einen anderen Schutzgerät (20, 40) aufgenommen oder erkannt worden ist.

## Beschreibung

Die Erfindung bezieht sich auf Schutzgeräte, Anordnungen mit Schutzgeräten und Verfahren zu deren Betrieb.

Bekannt sind zum Schutz elektrischer Energieversorgungsanlagen Schutzgeräte, die mit mindestens einer Datenübertragungsschnittstelle ausgestattet sind. Über die Datenübertragungsschnittstellen können die Schutzgeräte miteinander kommunizieren. Außerdem ist bekannt, dass Schutzgeräte die Zustände von Energieversorgungsanlagen erfassen und im Falle von Zustandswechseln Zustandswechselmeldungen erzeugen und lokal abspeichern können. Auch ist bekannt, dass Schutzgeräte im Falle von Störungen oder Fehlern Störschriebe erzeugen und lokal abspeichern können, die eine nachträgliche Analyse der aufgetretenen Störungen oder Fehler ermöglichen; solche Störschriebe können beispielsweise den zeitlichen Verlauf von Strom- und/oder Spannungsabtastwerten umfassen.

Der Erfindung liegt die Aufgabe zugrunde, ein Schutzgerät der beschriebenen Art besonders bedienerfreundlich zu gestalten.

Diese Aufgabe wird erfindungsgemäß durch ein Schutzgerät mit den Merkmalen gemäß Patentanspruch 1 gelöst. Vorteilhafte Ausgestaltungen des erfindungsgemäßen Schutzgeräts sind in Unteransprüchen angegeben.

Danach ist erfindungsgemäß vorgesehen, dass das Schutzgerät eine Auswerteinrichtung aufweist, die dazu ausgestaltet ist, über die mindestens eine Datenübertragungsschnittstelle empfangene Daten des zumindest einen anderen Schutzgeräts auszuwerten und darin enthaltene Störschriebe und/oder Zustandswechselmeldungen sowie in den Daten enthaltene Uhrzeitstempel, die dem jeweiligen Störschrieb oder der jeweiligen Zustandswechselmeldung zugeordnet sind, auszulesen, und das Schutzgerät eine Dokumentationseinrichtung aufweist, die im Falle eines empfangenen Störschriebs oder einer empfangenen Zustandswechselmeldung den jeweils dazu ebenfalls empfangenen Uhrzeitstempel in einen korrespondierenden eigenen Uhrzeitstempel umrechnet und den eigenen Uhrzeitstempel dem empfangenen Störschrieb oder der empfangenen Zustandswechselmeldung zuordnet, wobei der empfangene Uhrzeitstempel die Uhrzeit der Aufnahme des jeweiligen Störschriebs oder die Uhrzeit des Erkennens eines von der jeweiligen Zustandswechselmeldung angezeigten Zustandswechsels gemäß der jeweiligen Uhrzeit des zumindest einen anderen Schutzgeräts angibt und wobei der eigene Uhrzeitstempel angibt, zu welcher Uhrzeit der jeweilige Störschrieb oder der jeweilige Zustandswechsel gemäß der eigenen Uhrzeit von dem zumindest einen anderen Schutzgerät aufgenommen oder erkannt worden ist.

Ein wesentlicher Vorteil des erfindungsgemäßen Schutzgeräts ist darin zu sehen, dass dieses eigene Zustandswechselmeldungen und/oder eigene Störschriebe sowie zusätzlich fremde Zustandswechselmeldungen, also Zustandswechselmeldungen anderer Schutzgeräte, und/oder fremde Störschriebe, also Störschriebe anderer Schutzgeräte, verarbeiten kann. Durch das Übertragen von Zustandswechselmeldungen und/oder Störschrieben zwischen den Schutzgeräten und das erfindungsgemäß vorgesehene Zuordnen korrespondierender eigener Uhrzeitstempel zu empfangenen Zustandswechselmeldungen und/oder zu empfangenen Störschrieben ist es für Bedien- oder Wartungspersonal in besonders einfacher Weise möglich, nachträglich auf abgespeicherte Zustandswechselmeldungen und/oder abgespeicherte Störschriebe zuzugreifen, nämlich schutzgeräteübergreifend: Beispielsweise kann örtlich an einem Schutzgerät nicht nur auf Zustandswechselmeldungen und/oder Störschriebe des jeweiligen Schutzgerätes zugegriffen werden, an dem der Zugriff erfolgt, sondern es können auch Zustandswechselmeldungen und/oder Störschriebe anderer Schutzgeräte abgefragt werden. Da den fremden Zustandswechselmeldungen und/oder fremden Störschrieben jeweils Uhrzeitstempel auf der Basis des Schutzgeräts, an dem die Abfrage erfolgt, zugeordnet sind, können die abgefragten Zustandswechselmeldungen und/oder Störschriebe besonders aufwandsarm interpretiert werden, insbesondere deshalb, weil seitens des Bedien- oder Wartungspersonals keine Kenntnis des Gangunterschieds zwischen den Zeitbasen der Schutzgeräte vorliegen muss. Der letztgenannte Aspekt ist insbesondere deshalb von großer Bedeutung, weil sich der Gangunterschied mit der Zeit verändern kann und eine nachträgliche spätere Auswertung fremder Zustandswechselmeldungen und/oder fremder Störschriebe nicht nur den aktuellen Gangunterschied, sondern den Gangunterschied zum Zeitpunkt der jeweiligen Erfassung der Zustandswechselmeldungen und/oder Störschriebe berücksichtigen sollte.

Als vorteilhaft wird es angesehen, wenn das Schutzgerät eine Zustandswechselsortiereinrichtung aufweist, die dazu ausgestaltet ist, die Zustandswechselmeldungen des zumindest einen anderen Schutzgeräts und eigene Zustandswechselmeldungen nach den eigenen Uhrzeitstempeln zu sortieren und eine sortierte Zustandswechselliste zu erstellen, die die eigenen Zustandswechselmeldungen und die des zumindest anderen Schutzgeräts auf der Basis der eigenen Uhrzeit sortiert auflistet.

Alternativ oder zusätzlich kann in vorteilhafter Weise vorgesehen sein, dass das Schutzgerät eine Störschriebsortiereinrichtung aufweist, die dazu ausgestaltet ist, die Störschriebe des zumindest einen anderen Schutzgeräts und eigene Störschriebe nach den eigenen Uhrzeitstempeln zu sortieren und eine sortierte Störschriebliste zu erstellen, die die eigenen Störschriebe und die des zumindest anderen Schutzgeräts auf der Basis der eigenen Uhrzeit sortiert auflistet.

Die Zustandswechselsortiereinrichtung und die Störschriebsortiereinrichtung sind vorzugsweise in einer Sortiereinrichtung integriert, die Zustandswechselmeldungen und Störschriebe sortieren kann.

Auch ist es vorteilhaft, wenn das Schutzgerät eine Zustandswechselmeldeeinrichtung aufweist, die dazu ausgestaltet ist, über die Datenübertragungsschnittstelle eigene Zustandswechselmeldungen, denen jeweils ein den Zustandswechsel auf der Basis der eigenen Uhrzeit angebender Uhrzeitstempel zugeordnet ist, gemeinsam mit dem jeweiligen Uhrzeitstempel an das zumindest eine andere Schutzgerät zu übermitteln.

Auch ist es vorteilhaft, wenn das Schutzgerät eine Störschriebmeldeeinrichtung aufweist, die dazu ausgestaltet ist, über die oder eine oder mehrere der Datenübertragungsschnittstellen eigene Störschriebe, denen jeweils ein auf der eigenen Uhrzeit beruhender Uhrzeitstempel zugeordnet ist, gemeinsam mit dem jeweiligen Uhrzeitstempel an das zumindest eine andere Schutzgerät zu übermitteln.

Die Zustandswechselmeldeeinrichtung und die Störschriebmeldeeinrichtung sind vorzugsweise in einer Meldeeinrichtung integriert, die Zustandswechselmeldungen und Störschriebe melden kann. Die Meldeeinrichtung kann die Zustandswechselmeldungen und Störschriebe beispielsweise abspeichern und ein Melden durch Auslesen ermöglichen.

Das Schutzgerät weist vorzugsweise eine Versatzbestimmungseinrichtung auf, die dazu ausgestaltet ist, über die Datenübertragungsschnittstelle mit dem zumindest einen anderen Schutzgerät zu kommunizieren, um einen Versatz zwischen den Uhrzeiten der beiden Schutzgeräte unter Bildung einer Uhrzeitversatzangabe zu ermitteln.

Die Dokumentationseinrichtung errechnet vorzugsweise im Falle eines empfangenen Störschriebs oder einer empfangenen Zustandswechselmeldung den jeweils empfangenen Uhrzeitstempel in den korrespondierenden eigenen Uhrzeitstempel durch vorzeichenrichtige Addition der Uhrzeitversatzangabe zu dem empfangenen Uhrzeitstempel.

Die empfangenen Zustandswechselmeldungen und/oder Störschriebe werden vorzugsweise mit den zugeordneten eigenen Uhrzeitstempeln zwecks Weiterverarbeitung in dem Schutzgerät abgespeichert.

Das Schutzgerät weist vorzugsweise eine Recheneinrichtung und einen Speicher auf, in dem ein Computerprogrammprodukt abgespeichert ist, das bei Ausführung durch die Recheneinrichtung die Arbeitsweise des Schutzgeräts bestimmt oder zumindest mitbestimmt,

Die Auswerteinrichtung und die Dokumentationseinrichtung sind vorzugsweise in dem Computerprogrammprodukt implementiert.

Auch ist es von Vorteil, wenn in dem Computerprogrammprodukt außerdem implementiert sind: die Zustandswechselsortiereinrichtung wie oben beschrieben und/oder die Störschriebsortiereinrichtung wie oben beschrieben und/oder die Zustandswechselmeldeeinrichtung wie oben beschrieben und/oder die Störschriebmeldeeinrichtung wie oben beschrieben und/oder die Versatzbestimmungseinrichtung wie oben beschrieben.

Um ein Auslesen von Zustandswechselmeldungen und/oder Störschrieben besonders einfach, beispielsweise durch Wartungs- oder Bedienpersonal vor Ort, zu ermöglichen, ist es vorteilhaft, wenn das Schutzgerät eine Ausleseschnittstelle aufweist, die ein Auslesen der auf der Basis der eigenen Uhrzeit sortierten Zustandswechselliste und/oder ein Auslesen der auf die eigene Uhrzeit sortierten Störschriebliste vor Ort am Schutzgerät ermöglicht.

Die Erfindung bezieht sich außerdem auf ein Verfahren zum Betreiben eines Schutzgeräts, insbesondere eines solchen wie oben beschrieben, das zum Schutz einer elektrischen Energieversorgungsanlage ausgebildet ist, wobei das Schutzgerät mit mindestens einer Datenübertragungsschnittstelle ausgestattet ist, die zum Kommunizieren mit zumindest einem anderen Schutzgerät geeignet ist. Bezüglich eines solchen Verfahrens ist erfindungsgemäß vorgesehen, dass das Schutzgerät über die Datenübertragungsschnittstelle empfangene Daten auswertet und darin enthaltene Störschriebe und/oder Zustandswechselmeldungen des zumindest einen anderen Schutzgeräts sowie diesen zugeordnete Uhrzeitstempel, die dem jeweiligen Störschrieb oder der jeweiligen Zustandswechselmeldung zugeordnet sind, ausliest und das Schutzgerät im Falle eines empfangenen Störschriebs oder einer empfangenen Zustandswechselmeldung den jeweils empfangenen Uhrzeitstempel in einen korrespondierenden eigenen Uhrzeitstempel umrechnet und den korrespondierenden eigenen Uhrzeitstempel dem empfangenen Störschrieb oder der empfangenen Zustandswechselmeldung zuordnet, wobei der empfangene Uhrzeitstempel die Uhrzeit der Aufnahme des jeweiligen Störschriebs oder die Uhrzeit des Erkennens eines von der jeweiligen Zustandswechselmeldung angezeigten Zustandswechsels gemäß der jeweiligen Uhrzeit des zumindest einen anderen Schutzgeräts angibt und wobei der korrespondierenden eigene Uhrzeitstempel angibt, zu welcher Uhrzeit der jeweilige Störschrieb oder der jeweilige Zustandswechsel gemäß der eigenen Uhrzeit von dem zumindest einen anderen Schutzgerät aufgenommen oder erkannt worden ist.

Auch kann das Schutzgerät Abtastzeitstempel von Abtastwerten innerhalb empfangener Störschriebe auf die eigene Uhrzeit umrechnen; dabei können die umgerechneten Abtastzeitstempel anstatt der ursprünglichen Abtastzeitstempel abgespeichert werden und diese ersetzen oder alternativ zusätzlich zu diesen abgespeichert werden.

Darüber hinaus kann das Schutzgerät eigene Störschriebe und empfangene Störschriebe basierend auf der eigenen Uhrzeit zusammenführen und als zusammengeführte bzw. synchronisierte Störschriebe abspeichern.

Bezüglich der Vorteile des erfindungsgemäßen Verfahrens sowie vorteilhafter Ausgestaltungen des erfindungsgemäßen Verfahrens sei auf die obigen Ausführungen im Zusammenhang mit dem erfindungsgemäßen Schutzgerät und dessen vorteilhafter Ausgestaltungen verwiesen.

Die Erfindung bezieht sich außerdem auf eine Anordnung mit zumindest zwei Schutzgeräten, die über ein Datenübertragungssystem miteinander verbunden sind. Erfindungsgemäß ist vorgesehen, dass die Schutzgeräte wie oben beschrieben ausgestaltet sind.

Bezüglich der Vorteile der erfindungsgemäßen Anordnung sowie vorteilhafter Ausgestaltungen der erfindungsgemäßen Anordnung sei auf die obigen Ausführungen im Zusammenhang mit dem erfindungsgemäßen Schutzgerät und dessen vorteilhafter Ausgestaltungen verwiesen.

Die Erfindung bezieht sich außerdem auf ein Verfahren zum Betreiben einer Anordnung, die zumindest zwei über ein Datenübertragungssystem miteinander verbundene Schutzgeräte, insbesondere solche wie oben beschrieben, umfasst. Erfindungsgemäß ist bezüglich eines solchen Verfahrens vorgesehen, dass die Schutzgeräte jeweils eigene Zustandswechselmeldungen, denen jeweils ein den jeweiligen Zustandswechsel auf der Basis der eigenen Uhrzeit angebender Uhrzeitstempel zugeordnet ist, sowie die entsprechend zugeordneten Uhrzeitstempel über das Datenübertragungssystem aussenden, über die Datenübertragungsschnittstelle empfangene Daten auswerten und darin enthaltene Zustandswechselmeldungen eines oder mehrerer anderer Schutzgeräte sowie diesen zugeordnete Uhrzeitstempel, die der jeweiligen Zustandswechselmeldung zugeordnet sind, auslesen, im Falle einer jeden empfangenen Zustandswechselmeldung den jeweils empfangenen Uhrzeitstempel in einen korrespondierenden eigenen Uhrzeitstempel umrechnen und die korrespondierenden eigenen Uhrzeitstempel den empfangenen Zustandswechselmeldungen zuordnen, und die Zustandswechselmeldungen des zumindest einen anderen Schutzgeräts und eigene Zustandswechselmeldungen nach den eigenen Uhrzeitstempeln sortieren und eine sortierte Zustandswechselliste erstellen, die die eigenen Zustandswechselmeldungen und die des zumindest einen anderen Schutzgeräts auf der Basis der eigenen Uhrzeit sortiert auflisten.

Bezüglich der Vorteile des letztgenannten Verfahrens sowie vorteilhafter Ausgestaltungen des letztgenannten Verfahrens sei auf die obigen Ausführungen im Zusammenhang mit dem erfindungsgemäßen Schutzgerät und dessen vorteilhafter Ausgestaltungen verwiesen.

Die Erfindung bezieht sich außerdem auf ein Verfahren, insbesondere als Ergänzung zu dem davor genannten Verfahren, zum Betreiben einer Anordnung, die zumindest zwei über ein Datenübertragungssystem miteinander verbundene Schutzgeräte, insbesondere solche wie oben beschrieben, umfasst. Erfindungsgemäß ist bezüglich dieses letztgenannten Verfahrens vorgesehen, dass die Schutzgeräte jeweils eigene Störschriebe, denen jeweils ein den jeweiligen Störschrieb auf der Basis der eigenen Uhrzeit angebender Uhrzeitstempel zugeordnet ist, über das Datenübertragungssystem aussenden, über die Datenübertragungsschnittstelle empfangene Daten auswerten und darin enthaltene Störschriebe eines oder mehrerer anderer Schutzgeräte sowie diesen zugeordnete Uhrzeitstempel, die dem jeweiligen Störschrieb zugeordnet sind, auslesen, im Falle eines jeden empfangenen Störschriebs den jeweils empfangenen Uhrzeitstempel in einen korrespondierenden eigenen Uhrzeitstempel umrechnen und diesen dem jeweiligen Störschrieb zuordnen und die Störschriebe des zumindest einen anderen Schutzgeräts und eigene Störschriebe nach den eigenen Uhrzeitstempeln sortieren und eine sortierte Störschriebliste erstellen, die die eigenen Störschriebe und die des zumindest einen anderen Schutzgeräts auf der Basis der eigenen Uhrzeit sortiert auflisten.

Auch können die Schutzgeräte jeweils die Abtastzeitstempel der Abtastwerte innerhalb empfangener Störschriebe auf die eigene Uhrzeit umrechnen; dabei können sie die umgerechneten Abtastzeitstempel anstatt der empfangenen Abtastzeitstempel abspeichern, also die empfangenen Abtastzeitstempel ersetzen, oder die umgerechneten Abtastzeitstempel zusätzlich zu den empfangenen Abtastzeitstempeln abspeichern.

Darüber hinaus können die Schutzgeräte eigene Störschriebe und empfangene Störschriebe auf der Basis der eigenen Uhrzeit bzw. unter Einbezug umgerechneter Abtastzeitstempel zusammenführen und zusammengeführte bzw. synchronisierte Störschriebe bilden, die eigene und fremde Störschriebe bezogen auf die eigene Uhrzeit beinhalten.

Bezüglich der Vorteile des letztgenannten Verfahrens sowie vorteilhafter Ausgestaltungen des letztgenannten Verfahrens sei auf die obigen Ausführungen im Zusammenhang mit dem erfindungsgemäßen Schutzgerät und dessen vorteilhafter Ausgestaltungen verwiesen.

Die Erfindung bezieht sich außerdem auf ein Computerprogrammprodukt. Bezüglich des Computerprogrammprodukts ist erfindungsgemäß vorgesehen, dass dieses Programmbefehle umfasst, die bei Ausführung durch eine Recheneinrichtung eines Schutzgerätes dieses veranlasst, eines oder mehrere der oben beschriebenen Verfahren durchzuführen.

Die Erfindung wird nachfolgend anhand von Ausführungsbeispielen näher erläutert; dabei zeigen beispielhaft:
- Figur 1: ein erstes Ausführungsbeispiel für eine erfindungsgemäße Anordnung, anhand derer Ausführungsbeispiele für erfindungsgemäße Verfahren erläutert werden,
- Figur 2: ein zweites Ausführungsbeispiel für eine erfindungsgemäße Anordnung, anhand derer weitere Ausführungsbeispiele für erfindungsgemäße Verfahren erläutert werden, und
- Figur 3: ein Ausführungsbeispiel für den Aufbau eines erfindungsgemäßen Schutzgerätes näher im Detail.

In den Figuren werden der Übersicht halber für identische oder vergleichbare Komponenten stets dieselben Bezugszeichen verwendet.

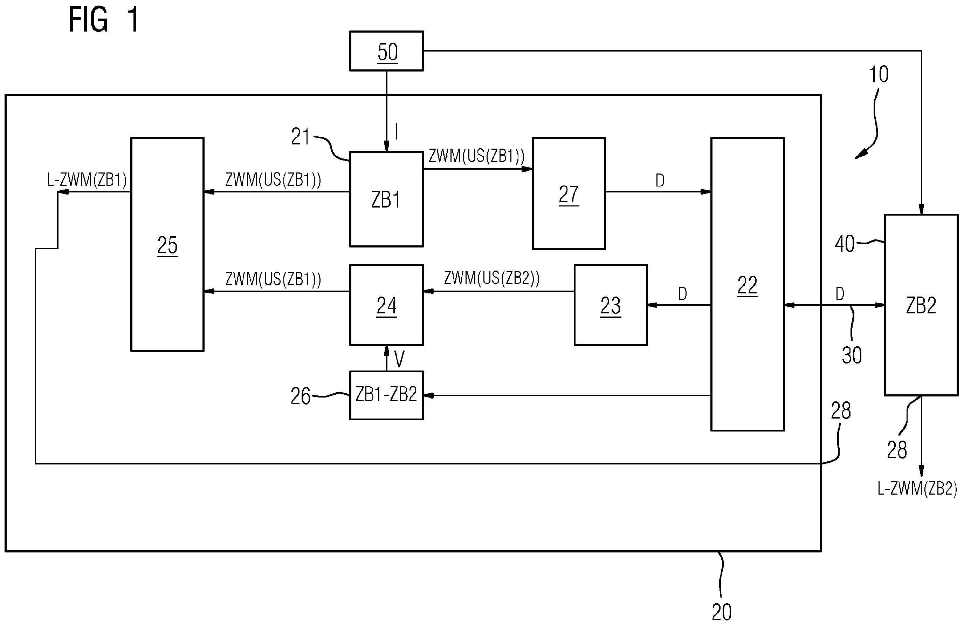

Die Figur 1 zeigt eine Anordnung 10, die ein erstes Schutzgerät 20 und ein über eine Datenübertragungseinrichtung 30 mit diesem in Verbindung stehendes zweites Schutzgerät 40 umfasst. Die beiden Schutzgeräte 20 und 40 können über die Datenübertragungseinrichtung 30 miteinander Daten D austauschen.

Die beiden Schutzgeräte 20 und 40 können beispielsweise baugleich sein, sodass die nachfolgenden Ausführungen im Zusammenhang mit dem ersten Schutzgerät 20 für das zweite Schutzgerät 40 entsprechend gelten oder zumindest gelten können.

Das erste Schutzgerät 20 gemäß Figur 1 umfasst eine Schutzeinrichtung 21, die über nicht weiter dargestellte Sensoren oder Wandler oder dergleichen an eine Energieversorgungsanlage 50 angeschlossen ist und von diesen Informationen I wie beispielsweise Spannungsabtastwerte, Stromabtastwerte oder Stellinformationen erhält, die sich auf die Energieversorgungsanlage 50 beziehen bzw. deren Zustand beschreiben. Das zweite Schutzgerät 40 kann an dieselbe Energieversorgungsanlage 50 angeschlossen sein, sei es an denselben Abschnitt wie das erste Schutzgerät 20 oder einen anderen Abschnitt, oder eine andere Energieversorgungsanlage.

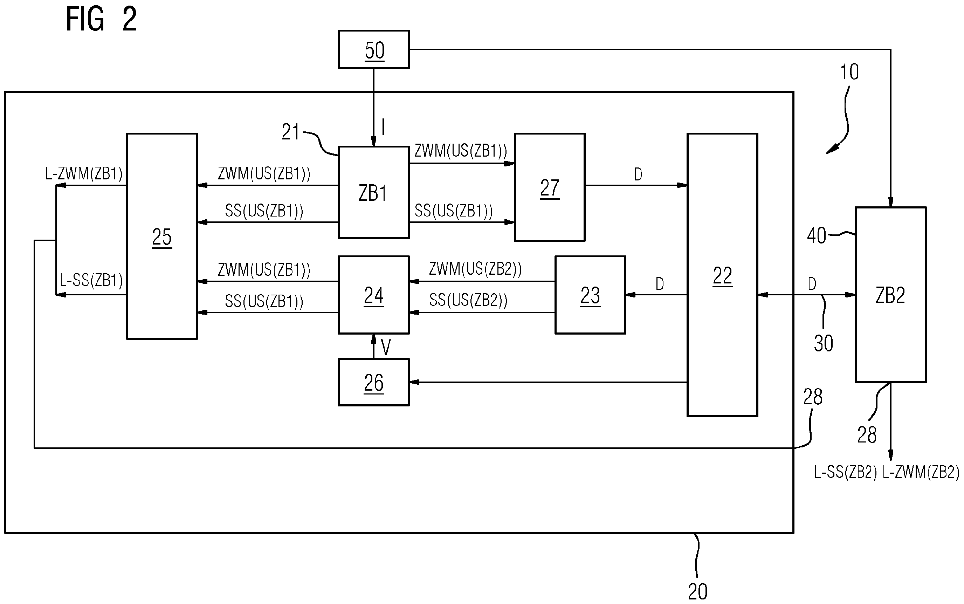

Mit den Informationen I kann die Schutzeinrichtung 21 Zustandswechselmeldungen ZWM und/oder Störschriebe SS (vgl. Figur 2) bilden. Die Bildung von Zustandswechselmeldungen ZWM und/oder Störschrieben SS ist im Zusammenhang mit Schutzgeräten allgemein bekannt, sodass diesbezüglich auf die Fachliteratur verwiesen sei.

Das erste Schutzgerät 20 gemäß Figur 1 umfasst außerdem eine Datenübertragungsschnittstelle 22, die zum Kommunizieren mit dem zweiten Schutzgerät 40 über die Datenübertragungseinrichtung 30 geeignet ist, eine Auswerteinrichtung 23, eine Dokumentationseinrichtung 24, eine Sortiereinrichtung 25, eine Versatzbestimmungseinrichtung 26, eine Meldeeinrichtung 27 und eine Ausleseschnittstelle 28.

Das erste Schutzgerät 20 gemäß Figur 1 bzw. deren Komponenten sind vorzugsweise derart ausgestaltet, dass das Schutzgerät 20 wie folgt arbeiten kann:
Die Auswerteinrichtung 23 dient dazu, über die Datenübertragungsschnittstelle 22 empfangene Daten D des zweiten Schutzgeräts 40 auszuwerten und darin enthaltene Zustandswechselmeldungen ZWM sowie in den Daten D enthaltene Uhrzeitstempel US, die der jeweiligen Zustandswechselmeldung ZWM zugeordnet sind und beispielsweise den Zeitpunkt des Auftretens des jeweiligen Zustandswechsels angeben, auszulesen. Die Uhrzeitstempel US des zweiten Schutzgeräts 40 beziehen sich auf eine Zeitbasis ZB2, auf deren Basis das zweite Schutzgerät 40 arbeitet.

Die der Auswerteinrichtung 23 nachgeordnete Dokumentationseinrichtung 24 rechnet im Falle einer von dem zweiten Schutzgerät 40 empfangenen Zustandswechselmeldung ZWM den zu der jeweiligen Zustandswechselmeldung ZWM ebenfalls empfangenen Uhrzeitstempel US(ZB2) in einen korrespondierenden eigenen Uhrzeitstempel US(ZB1) um und ordnet diesen eigenen Uhrzeitstempel US(ZB1) der Zustandswechselmeldung ZWM unter Bildung einer zeitkorrigierten Zustandswechselmeldung ZWM(US(ZB1)) zu, wodurch sie die fremden bzw. externen Zustandswechsel auf der Basis der eigenen Zeitbasis dokumentiert. Die empfangenen Zustandswechselmeldungen ZWM und die zugeordneten Uhrzeitstempel US(ZB1) werden vorzugsweise in dem ersten Schutzgerät 20 abgespeichert.

Den korrespondierenden eigenen Uhrzeitstempel US(ZB1) errechnet die Dokumentationseinrichtung 24 beispielsweise durch vorzeichenrichtige Addition einer von der Versatzbestimmungseinrichtung 26 gelieferten Uhrzeitversatzangabe V und dem empfangenen Uhrzeitstempel US(ZB2), der zu der empfangenen Zustandswechselmeldung ZWM(US(ZB2)) gehört.

Die Uhrzeitversatzangabe V gibt einen Zeitversatz zwischen einer Zeitbasis ZB1, auf deren Basis das erste Schutzgerät 20 arbeitet, und der Zeitbasis ZB2, auf deren Basis das zweite Schutzgerät 40 arbeitet, an. Die Ermittlung eines Zeitversatzes zwischen Zeitbasen verschiedener, über eine Datenübertragungseinrichtung 30 miteinander verbundener Einrichtungen ist beispielsweise im Bereich der Computertechnik allgemein bekannt, sodass diesbezüglich auf die Literatur verwiesen sei. Erwähnt sei in diesem Zusammenhang lediglich, dass der Zeitversatz durch eine Kommunikation zwischen der Versatzbestimmungseinrichtung 26 des ersten Schutzgerätes 20 und einer mit dieser korrespondierenden Versatzbestimmungseinrichtung des zweiten Schutzgerätes 40 durch den regelmäßen Austausch von Datensignalen erfolgen kann, wobei die Latenz der Datenübertragung beispielsweise durch statistische Auswertungen ermittelt werden kann.

Die zeitkorrigierten Zustandswechselmeldungen ZWM(US(ZB1)) gelangen zu der der Dokumentationseinrichtung 24 nachgeordneten Sortiereinrichtung 25. Zu der Sortiereinrichtung 25 gelangen außerdem Zustandswechselmeldungen ZWM(US(ZB1)), die die Schutzeinrichtung 21 des ersten Schutzgeräts 20 erzeugt hat. Den letztgenannten Zustandswechselmeldungen ZWM(US(ZB1)) ist jeweils ebenfalls ein eigener Uhrzeitstempel US(ZB1) zugeordnet, also ein Uhrzeitstempel US, der auf der Basis der Zeitbasis ZB1 des eigenen, hier also des ersten, Schutzgeräts 20 beruht.

Die Sortiereinrichtung 25 sortiert die eingangsseitig anliegenden Zustandswechselmeldungen ZWM, also die zeitkorrigierten Zustandswechselmeldungen ZWM(US(ZB1)) des zweiten Schutzgeräts 40 und die Zustandswechselmeldungen ZWM(US(ZB1)) des eigenen Schutzgeräts 20 unter Bildung einer sortierten Zustandswechselliste L-ZWM(ZB1). Die sortierte Zustandswechselliste L-ZWM(ZB1) listet somit die eigenen Zustandswechselmeldungen ZWM und die des zweiten Schutzgeräts 40 auf der Basis der eigenen Uhrzeitstempel US(ZB1) sortiert auf.

An einer Ausleseschnittstelle 28 des ersten Schutzgeräts 20 kann die sortierte Zustandswechselliste L-ZWM(ZB1) beispielsweise von Wartungspersonal vor Ort ausgelesen werden, sodass an der Ausleseschnittstelle 28 - also vor Ort an dem ersten Schutzgerät 20 - die zeitlich sortierten Zustandswechselmeldungen ZWM sowohl des ersten als auch des zweiten Schutzgeräts abfragbar sind, wobei sich alle Zustandswechselmeldungen ZWM auf die Zeitbasis ZB1 des ersten Schutzgeräts 20 beziehen.

Die Zustandswechselmeldungen ZWM der Schutzeinrichtung 21 des ersten Schutzgeräts 20, denen jeweils eigene Uhrzeitstempel US anhand der eigenen Zeitbasis ZB1 zugordnet sind, gelangen außerdem zu der Meldeeinrichtung 27, die die Zustandswechselmeldungen ZWM des ersten Schutzgeräts 20 jeweils mit einem Uhrzeitstempel US gemäß der Zeitbasis ZB1 an das zweite Schutzgerät 40 in Form von Daten D übersendet.

Das zweite Schutzgerät 40 kann somit die Zustandswechselmeldungen ZWM des ersten Schutzgerätes 20 ebenfalls verarbeiten und beispielsweise ebenfalls eine sortierte Zustandswechselliste L-ZWM(ZB2) erstellen, sodass an einer Ausleseschnittstelle 28 des zweiten Schutzgerätes die zeitlich sortierten Zustandswechselmeldungen ZWM sowohl des zweiten als auch des ersten Schutzgeräts abfragbar sind, wobei sich dort alle Zustandswechselmeldungen ZWM auf die Zeitbasis ZB2 des zweiten Schutzgeräts 40 beziehen.

Geht man beispielsweise davon aus, dass die Zeitbasis ZB2 des zweiten Schutzgeräts 40 um eine Stunde gegenüber der Zeitbasis ZB1 des ersten Schutzgeräts 20 vorgeht, beispielsweise weil sich die beiden Schutzgeräte in unterschiedlichen Zeitzonen befinden, so kann eine sortierte Zustandswechselliste L-ZWM(ZB1) des ersten Schutzgerätes 20 wie folgt aussehen:
**ZWM(10.30h)**
ZWM(10.45h)
**ZWM(11.20h)**
**ZWM(12.40h)**
ZWM(13.10h)

wenn das erste Schutzgerät 20 eine erste Zustandswechselmeldung ZWM um 10.30h, eine zweite Zustandswechselmeldung ZWM um 11.20h und eine dritte Zustandswechselmeldung ZWM um 12.40h jeweils gemäß der eigenen Zeitbasis ZB1 erzeugt hat und wenn das zweite Schutzgerät 40 eine erste Zustandswechselmeldung ZWM um 9.45h und eine zweite Zustandswechselmeldung ZWM um 12.10h jeweils gemäß der Zeitbasis ZB2 erzeugt hat.

Die sortierte Zustandswechselliste (L-ZWM(ZB2)) des zweiten Schutzgerätes würde demgemäß um eine Stunde vorverlegt wie folgt aussehen:

**ZWM(09.30h)**
ZWM(09.45h)
**ZWM(10.20h)**
**ZWM(11.40h)**
ZWM(12.10h)

Wenn die Sortiereinrichtung 25 des ersten Schutzgerätes 20 lediglich die Zustandswechselliste L-ZWM(ZB1) erzeugt, so kann sie auch als Zustandswechselsortiereinrichtung bezeichnet werden.

Wenn die Meldeeinrichtung 27 des ersten Schutzgerätes 20 lediglich Zustandswechselmeldungen ZWM an das zweite Schutzgerät 40 übermittelt, so kann sie auch als Zustandswechselmeldungseinrichtung bezeichnet werden.

Alternativ oder zusätzlich zu den Zustandswechselmeldungen ZWM können die Auswerteinrichtung 23, die Sortiereinrichtung 25 und die Meldeeinrichtung 27 auch Störschriebe SS verarbeiten, wie beispielhaft die Figur 2 zeigt; diesbezüglich gelten die obigen Ausführungen im Zusammenhang mit den Zustandswechselmeldungen ZWM entsprechend. Den empfangenen Störschrieben werden jeweils eigene Uhrzeitstempel US(ZB1) unter Berücksichtigung der empfangenen Uhrzeitstempel US(ZB2) zugeordnet und es werden die empfangenen Störschriebe SS mit den zugeordneten eigenen Uhrzeitstempeln US(ZB1) in dem ersten Schutzgerät 20 abgespeichert. Die empfangenen Uhrzeitstempel US(ZB2) geben beispielsweise jeweils den zeitlichen Beginn eines Störschriebs, also beispielsweise den Beginn eines Verlaufs von aufgezeichneten Strom- und/oder Spannungsabtastwerten, bezogen auf die Zeitbasis ZB2 an, und die zugeordneten Uhrzeitstempel US(ZB1) geben den zeitlichen Beginn des jeweiligen Störschriebs bezogen auf die Zeitbasis ZB1 an.

Von Vorteil ist es, wenn die Sortiereinrichtung 25 beispielsweise außerdem eine sortierte Störschriebliste L-SS(ZB1) bildet. Die sortierte Störschriebliste L-SS(ZB1) des ersten Schutzgerätes 20 kann beispielsweise wie folgt aussehen:
**SS(10.30h)**
SS(10.45h)
**SS(11.20h)**
**SS(12.40h)**
SS(13.10h)
wenn das erste Schutzgerät 20 einen ersten Störschrieb SS um 10.30h, einen zweiten Störschrieb SS um 11.20h und einen dritte Störschrieb SS um 12.40h jeweils gemäß der eigenen Zeitbasis ZB1 erzeugt hat und wenn das zweite Schutzgerät 40 einen ersten Störschrieb SS um 9.45h und einen zweiten Störschrieb SS um 12.10h jeweils gemäß der Zeitbasis ZB2 erzeugt hat.

Die sortierte Störschriebliste L-SS(ZB2) des zweiten Schutzgerätes würde demgemäß um eine Stunde vorverlegt wie folgt aussehen:
**SS(09.30h)**
SS(09.45h)
**SS(10.20h)**
**SS(11.40h)**
SS(12.10h)

Wenn die Sortiereinrichtung 25 des ersten Schutzgerätes 20 lediglich die Störschriebliste L-SS(ZB1) erzeugt, so kann sie auch als Störschriebsortiereinrichtung bezeichnet werden.

Wenn die Meldeeinrichtung 27 des ersten Schutzgerätes 20 lediglich Störschriebe SS an das zweite Schutzgerät 40 übermittelt, so kann sie auch als Störschriebmeldeeinrichtung bezeichnet werden.

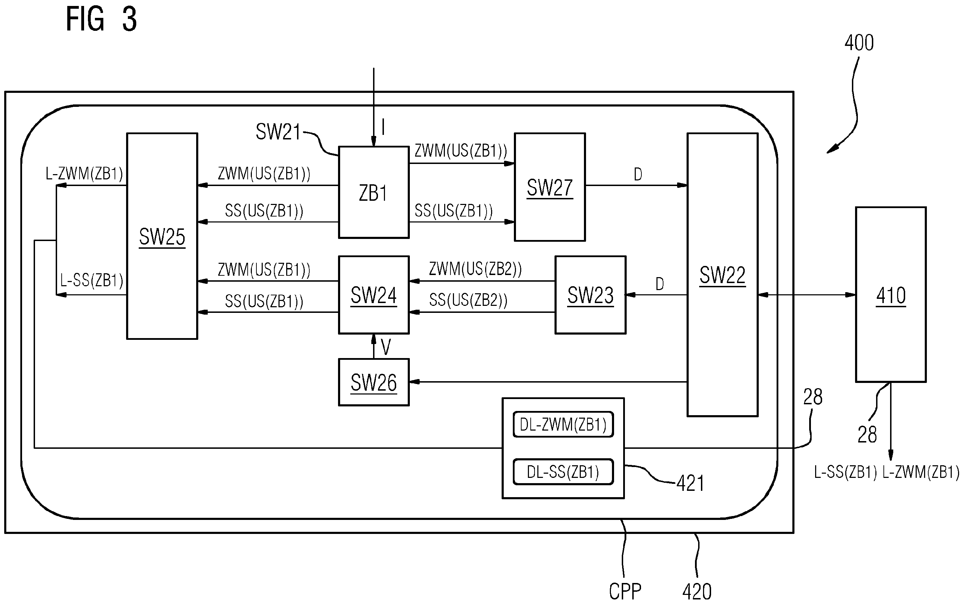

Die Figur 3 zeigt ein Ausführungsbeispiel für eine bevorzugte Ausgestaltung eines Schutzgerätes 400, das als Schutzgerät 20 und/oder 40 gemäß den Figuren 1 und 2 eingesetzt werden kann. Die nachfolgenden Ausführungen beziehen sich beispielhaft auf einen Einsatz des Schutzgerätes 400 als erstes Schutzgerät 20 gemäß den Figuren 1 und 2.

Das Schutzgerät 400 umfasst eine Recheneinrichtung 410 und einen Speicher 420. In dem Speicher 420 ist ein Computerprogrammprodukt CPP abgespeichert, das bei Ausführung durch die Recheneinrichtung 410 die Arbeitsweise des Schutzgeräts 400 bestimmt oder zumindest mitbestimmt.

Das Computerprogrammprodukt CPP umfasst ein Softwaremodul SW21, das bei Ausführung durch die Recheneinrichtung 410 die Schutzeinrichtung 21 gemäß den Figuren 1 und 2 bildet, ein Softwaremodul SW22, das bei Ausführung durch die Recheneinrichtung 410 die Datenübertragungsschnittstelle 22 gemäß den Figuren 1 und 2 bildet, ein Softwaremodul SW23, das bei Ausführung durch die Recheneinrichtung 410 die Auswerteinrichtung 23 gemäß den Figuren 1 und 2 bildet, ein Softwaremodul SW24, das bei Ausführung durch die Recheneinrichtung 410 die Dokumentationseinrichtung 24 gemäß den Figuren 1 und 2 bildet, ein Softwaremodul SW25, das bei Ausführung durch die Recheneinrichtung 410 die Sortiereinrichtung 25 gemäß den Figuren 1 und 2 bildet, ein Softwaremodul SW26, das bei Ausführung durch die Recheneinrichtung 410 die Versatzbestimmungseinrichtung 26 gemäß den Figuren 1 und 2 bildet, und ein Softwaremodul SW27, das bei Ausführung durch die Recheneinrichtung 410 die Meldeeinrichtung 27 gemäß den Figuren 1 und 2 bildet.

Die sortierte Zustandswechselliste L-ZWM(ZB1) und die sortierte Störschriebliste L-SS(ZB1) werden vorzugsweise in einer Zustandswechsellistendatei DL-ZWM(ZB1) bzw. einer Störschrieblistendatei DL-SS(ZB1), beispielsweise in einem Speicherabschnitt 421 des Speichers 420, abgespeichert, um eine Abfrage von außen durch unmittelbares Auslesen des Speichers 420 oder mittelbar durch eine an die Recheneinrichtung 410 gerichtete Ausleseanfrage zu ermöglichen. Die Ausleseschnittstelle 28 kann also beispielsweise durch einen Speicheranschluss und/oder oder einen Anschluss der Recheneinrichtung 410 gebildet sein.

In den Figuren 1 und 2 sind aus Gründen der Übersicht lediglich zwei Schutzgeräte 20 und 40 gezeigt, die über die Datenübertragungseinrichtung 30 Daten D und damit Zustandswechselmeldungen ZWM und Störschriebe SS untereinander austauschen. An die Datenübertragungseinrichtung 30 können auch mehr als zwei Schutzgeräte, also beispielsweise eine Vielzahl an Schutzgeräten, angeschlossen sein; in einem solchen Falle ist es vorteilhaft, wenn alle bzw. zumindest mehr als zwei Schutzgeräte ihre Zustandswechselmeldungen ZWM und Störschriebe SS untereinander austauschen, um ein lokales Auslesen der Zustandswechselmeldungen ZWM und Störschriebe SS von mehr als zwei Schutzgeräten an jedem dieser Schutzgeräte zu ermöglichen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

### Bezugszeichenliste

- 10: Anordnung
- 20: erstes Schutzgerät
- 21: Schutzeinrichtung
- 22: Datenübertragungsschnittstelle
- 23: Auswerteinrichtung
- 24: Dokumentationseinrichtung
- 25: Sortiereinrichtung
- 26: Versatzbestimmungseinrichtung
- 27: Meldeeinrichtung
- 28: Auslesestelle
- 30: Datenübertragungseinrichtung
- 40: zweites Schutzgerät
- 50: Energieversorgungsanlage
- 400: Schutzgerät
- 410: Recheneinrichtung
- 420: Speicher
- 421: Speicherabschnitt

- CPP: Computerprogrammprodukt
- D: Daten
- DL-SS: Störschrieblistendatei
- DL-ZWM: Zustandswechsellistendatei
- I: Informationen
- L-SS: sortierte Störschriebliste
- L-ZWM: sortierte Zustandswechselliste
- SS: Störschrieb
- SW21-SW27: Softwaremodule
- US: Uhrzeitstempel
- V: Uhrzeitversatzangabe
- ZB1: Zeitbasis
- ZB2: Zeitbasis
- ZWM: Zustandswechselmeldungen

## Patentansprüche

1. Schutzgerät (20, 40) zum Schutz einer elektrischen Energieversorgungsanlage (50), wobei das Schutzgerät (20, 40) mit mindestens einer Datenübertragungsschnittstelle (22) ausgestattet ist, die zum Kommunizieren mit zumindest einem anderen Schutzgerät (20, 40) geeignet ist,
**dadurch gekennzeichnet, dass**
- das Schutzgerät (20, 40) eine Auswerteinrichtung (23) aufweist, die dazu ausgestaltet ist, über die Datenübertragungsschnittstelle (22) empfangene Daten (D) des zumindest einen anderen Schutzgeräts (20, 40) auszuwerten und darin enthaltene Störschriebe (SS) und/oder Zustandswechselmeldungen (ZWM) sowie in den Daten (D) enthaltene Uhrzeitstempel (US), die dem jeweiligen Störschrieb (SS) oder der jeweiligen Zustandswechselmeldung (ZWM) zugeordnet sind, auszulesen, und
- das Schutzgerät (20, 40) eine Dokumentationseinrichtung (24) aufweist, die im Falle eines empfangenen Störschriebs (SS) oder einer empfangenen Zustandswechselmeldung (ZWM) den jeweils dazu ebenfalls empfangenen Uhrzeitstempel (US) in einen korrespondierenden eigenen Uhrzeitstempel (US) umrechnet und den eigenen Uhrzeitstempel (US) dem empfangenen Störschrieb (SS) oder der empfangenen Zustandswechselmeldung (ZWM) zuordnet,
- wobei der empfangene Uhrzeitstempel (US) die Uhrzeit der Aufnahme des jeweiligen Störschriebs (SS) oder die Uhrzeit des Erkennens eines von der jeweiligen Zustandswechselmeldung (ZWM) angezeigten Zustandswechsels gemäß der jeweiligen Uhrzeit des zumindest eines anderen Schutzgeräts (20, 40) angibt und
- wobei der eigene Uhrzeitstempel (US) angibt, zu welcher Uhrzeit der jeweilige Störschrieb (SS) oder der jeweilige Zustandswechsel gemäß der eigenen Uhrzeit von dem zumindest einen anderen Schutzgerät (20, 40) aufgenommen oder erkannt worden ist.

2. Schutzgerät (20, 40) nach Anspruch 1,
**dadurch gekennzeichnet, dass**
das Schutzgerät (20, 40) eine Zustandswechselsortiereinrichtung (25) aufweist, die dazu ausgestaltet ist, die Zustandswechselmeldungen (ZWM) des zumindest einen anderen Schutzgeräts (20, 40) und eigene Zustandswechselmeldungen (ZWM) nach den eigenen Uhrzeitstempeln (US) zu sortieren und eine sortierte Zustandswechselliste (L-ZWM(ZB1), L-ZWM(ZB2)) zu erstellen, die die eigenen Zustandswechselmeldungen (ZWM) und die des zumindest anderen Schutzgeräts (20, 40) auf der Basis der eigenen Uhrzeit sortiert auflistet.

3. Schutzgerät (20, 40) nach einem der voranstehenden Ansprüche,
**dadurch gekennzeichnet, dass**
das Schutzgerät (20, 40) eine Störschriebsortiereinrichtung (25) aufweist, die dazu ausgestaltet ist, die Störschriebe (SS) des zumindest einen anderen Schutzgeräts (20, 40) und eigene Störschriebe (SS) nach den eigenen Uhrzeitstempeln (US) zu sortieren und eine sortierte Störschriebliste (L-SS(ZB1), L-SS(ZB2)) zu erstellen, die die eigenen Störschriebe (SS) und die des zumindest anderen Schutzgeräts (20, 40) auf der Basis der eigenen Uhrzeit sortiert auflistet.

4. Schutzgerät (20, 40) nach einem der voranstehenden Ansprüche,
**dadurch gekennzeichnet, dass**
das Schutzgerät (20, 40) eine Zustandswechselmeldeeinrichtung (27) aufweist, die dazu ausgestaltet ist, über die Datenübertragungsschnittstelle (22) eigene Zustandswechselmeldungen (ZWM), denen jeweils ein den Zustandswechsel auf der Basis der eigenen Uhrzeit angebender Uhrzeitstempel (US) zugeordnet ist, gemeinsam mit dem jeweiligen Uhrzeitstempel (US) an das zumindest eine andere Schutzgerät (20, 40) zu übermitteln.

5. Schutzgerät (20, 40) nach einem der voranstehenden Ansprüche,
**dadurch gekennzeichnet, dass**
das Schutzgerät (20, 40) eine Störschriebmeldeeinrichtung (27) aufweist, die dazu ausgestaltet ist, über die Datenübertragungsschnittstelle (22) eigene Störschriebe (SS), denen jeweils ein auf der eigenen Uhrzeit beruhender Uhrzeitstempel (US) zugeordnet ist, gemeinsam mit dem jeweiligen Uhrzeitstempel (US) an das zumindest eine andere Schutzgerät (20, 40) zu übermitteln.

6. Schutzgerät (20, 40) nach einem der voranstehenden Ansprüche,
**dadurch gekennzeichnet, dass**
- das Schutzgerät (20, 40) eine Versatzbestimmungseinrichtung (26) aufweist, die dazu ausgestaltet ist, über die Datenübertragungsschnittstelle (22) mit dem zumindest einen anderen Schutzgerät (20, 40) zu kommunizieren, um einen Versatz zwischen den Uhrzeiten der beiden Schutzgeräte (20, 40) unter Bildung einer Uhrzeitversatzangabe (V) zu ermitteln, und
- die Dokumentationseinrichtung (24) im Falle eines empfangenen Störschriebs (SS) oder einer empfangenen Zustandswechselmeldung (ZWM) den jeweils empfangenen Uhrzeitstempel (US) in den korrespondierenden eigenen Uhrzeitstempel (US) durch vorzeichenrichtige Addition der Uhrzeitversatzangabe (V) zu dem empfangenen Uhrzeitstempel (US) errechnet.

7. Schutzgerät (20, 40) nach einem der voranstehenden Ansprüche,
**dadurch gekennzeichnet, dass**
- das Schutzgerät (20, 40) eine Recheneinrichtung (410) und einen Speicher (420) aufweist, in dem ein Computerprogrammprodukt (CPP) zugeordnet ist, das bei Ausführung durch die Recheneinrichtung (410) die Arbeitsweise des Schutzgeräts (20, 40) bestimmt oder zumindest mitbestimmt,
- wobei zumindest die Auswerteinrichtung (23) und die Dokumentationseinrichtung (24) im Computerprogrammprodukt (CPP) implementiert sind.

8. Schutzgerät (20, 40) nach Anspruch 7,
**dadurch gekennzeichnet, dass** in dem Computerprogrammprodukt (CPP) außerdem implementiert sind:
- die Zustandswechselsortiereinrichtung (25) gemäß Anspruch 2 und/oder
- die Störschriebsortiereinrichtung (25) gemäß Anspruch 3 und/oder
- die Zustandswechselmeldeeinrichtung (27) gemäß Anspruch 4 und/oder
- die Störschriebmeldeeinrichtung (27) gemäß Anspruch 5 und/oder
- die Versatzbestimmungseinrichtung (26) gemäß Figur 6.

9. Schutzgerät (20, 40) nach Anspruch 3 in dessen Rückbezug auf Anspruch 2,
**dadurch gekennzeichnet, dass**
das Schutzgerät (20, 40) eine Ausleseschnittstelle (28) aufweist, die ein Auslesen der auf der Basis der eigenen Uhrzeit sortierten Zustandswechselliste (L-ZWM(ZB1), L-ZWM(ZB2)) und/oder ein Auslesen der auf der Basis der eigenen Uhrzeit sortierten Störschriebliste (L-SS(ZB1), L-SS(ZB2)) vor Ort am Schutzgerät (20, 40) ermöglicht.

10. Verfahren zum Betreiben eines Schutzgeräts (20, 40), insbesondere eines solchen nach einem der voranstehenden Ansprüche, das zum Schutz einer elektrischen Energieversorgungsanlage (50) ausgebildet ist, wobei das Schutzgerät (20, 40) mit einer Datenübertragungsschnittstelle (22) ausgestattet ist, die zum Kommunizieren mit zumindest einem anderen Schutzgerät (20, 40) geeignet ist,
**dadurch gekennzeichnet, dass**
- das Schutzgerät (20, 40) über die Datenübertragungsschnittstelle (22) empfangene Daten (D) auswertet und darin enthaltene Störschriebe (SS) und/oder Zustandswechselmeldungen (ZWM) des zumindest einen anderen Schutzgeräts (20, 40) sowie diesen zugeordnete Uhrzeitstempel (US), die dem jeweiligen Störschrieb (SS) oder der jeweiligen Zustandswechselmeldung (ZWM) zugeordnet sind, ausliest und
- das Schutzgerät (20, 40) im Falle eines empfangenen Störschriebs (SS) oder einer empfangenen Zustandswechselmeldung (ZWM) den jeweils empfangenen Uhrzeitstempel (US) in einen korrespondierenden eigenen Uhrzeitstempel (US) umrechnet und den eigenen Uhrzeitstempel (US) dem empfangenen Störschrieb (SS) oder der empfangenen Zustandswechselmeldung (ZWM) zuordnet,
- wobei der empfangene Uhrzeitstempel (US) die Uhrzeit der Aufnahme des jeweiligen Störschriebs (SS) oder die Uhrzeit des Erkennens eines von der jeweiligen Zustandswechselmeldung (ZWM) angezeigten Zustandswechsels gemäß der jeweiligen Uhrzeit des zumindest einen anderen Schutzgeräts (20, 40) angibt und
- wobei der eigene Uhrzeitstempel (US) angibt, zu welcher Uhrzeit der jeweilige Störschrieb (SS) oder der jeweilige Zustandswechsel gemäß der eigenen Uhrzeit von dem zumindest einen anderen Schutzgerät (20, 40) aufgenommen oder erkannt worden ist.

11. Anordnung mit zumindest zwei Schutzgeräten (20, 40), die über ein Datenübertragungssystem miteinander verbunden sind,
**dadurch gekennzeichnet, dass**
die Schutzgeräte (20, 40) als Schutzgeräte (20, 40) nach einem der voranstehenden Ansprüche 1 bis 9 ausgestaltet sind.

12. Verfahren zum Betreiben einer Anordnung, die zumindest zwei über ein Datenübertragungssystem (30) miteinander verbundene Schutzgeräte (20, 40), insbesondere solche nach einem der voranstehenden Ansprüche 1 bis 9, umfasst,
**dadurch gekennzeichnet, dass**
die Schutzgeräte (20, 40) jeweils
- eigene Zustandswechselmeldungen (ZWM), denen jeweils ein den jeweiligen Zustandswechsel auf der Basis der eigenen Uhrzeit angebender Uhrzeitstempel (US) zugeordnet ist, sowie die entsprechend zugeordneten Uhrzeitstempel (US) über das Datenübertragungssystem aussenden,
- über die Datenübertragungsschnittstelle (22) empfangene Daten (D) auswerten und darin enthaltene Zustandswechselmeldungen (ZWM) eines oder mehrerer anderer Schutzgeräte (20, 40) sowie diesen zugeordnete Uhrzeitstempel (US), die der jeweiligen Zustandswechselmeldung (ZWM) zugeordnet sind, auslesen,
- im Falle einer jeden empfangenen Zustandswechselmeldung (ZWM) den jeweils empfangenen Uhrzeitstempel (US) in einen korrespondierenden eigenen Uhrzeitstempel (US) umrechnen und die korrespondierenden eigenen Uhrzeitstempel (US) den empfangenen Zustandswechselmeldungen (ZWM) zuordnen, und
- die Zustandswechselmeldungen (ZWM) des zumindest einen anderen Schutzgeräts (20, 40) und eigene Zustandswechselmeldungen (ZWM) nach den eigenen Uhrzeitstempeln (US) sortieren und eine sortierte Zustandswechselliste (L-ZWM(ZB1), L-ZWM(ZB2)) erstellen, die die eigenen Zustandswechselmeldungen (ZWM) und die des zumindest einen anderen Schutzgeräts (20, 40) auf der Basis der eigenen Uhrzeit sortiert auflisten.

13. Verfahren, insbesondere nach Anspruch 12, zum Betreiben einer Anordnung, die zumindest zwei über ein Datenübertragungssystem miteinander verbundene Schutzgeräte (20, 40), insbesondere solche nach einem der voranstehenden Ansprüche 1 bis 9, umfasst,
**dadurch gekennzeichnet, dass**
die Schutzgeräte (20, 40) jeweils
- eigene Störschriebe (SS), denen jeweils ein den jeweiligen Störschrieb (SS) auf der Basis der eigenen Uhrzeit angebender Uhrzeitstempel (US) zugeordnet ist, über das Datenübertragungssystem aussenden,
- über die Datenübertragungsschnittstelle (22) empfangene Daten (D) auswerten und darin enthaltene Störschriebe (SS) eines oder mehrerer anderer Schutzgeräte (20, 40) sowie diesen zugeordnete Uhrzeitstempel (US), die dem jeweiligen Störschrieb (SS) zugeordnet sind, auslesen,
- im Falle eines jeden empfangenen Störschriebs (SS) den jeweils empfangenen Uhrzeitstempel (US) in einen korrespondierenden eigenen Uhrzeitstempel (US) umrechnen und diesen dem jeweiligen Störschrieb (SS) zuordnen und
- die Störschriebe (SS) des zumindest einen anderen Schutzgeräts (20, 40) und eigene Störschriebe (SS) nach den eigenen Uhrzeitstempeln (US) sortieren und eine sortierte Störschriebliste (L-SS(ZB1), L-SS(ZB2)) erstellen, die die eigenen Störschriebe (SS) und die des zumindest einen anderen Schutzgeräts (20, 40) auf der Basis der eigenen Uhrzeit sortiert auflisten.

14. Computerprogrammprodukt (CPP),
**dadurch gekennzeichnet, dass**
das Computerprogrammprodukt (CPP) Programmbefehle umfasst, die bei Ausführung durch eine Recheneinrichtung (410) eines Schutzgerätes dieses veranlasst, ein Verfahren nach einem der voranstehenden Ansprüche 10, 12 oder 13 durchzuführen.
